# EUROPEAN PATENT APPLICATION

(11) **EP 2 441 329 A1**
(43) Date of publication of application: **18.04.2012**
(21) Application number: 11185680.3
(22) Date of filing: 18.10.2011
(51) Int. Cl.: A01L 1/00

(54) **Improved horseshoe**

(30) Priority: 18.10.2010 AU 2010904641
(71) Applicant: Coventry-Cox, Lara, Biddaddaba QLD 4275 (AU)
(72) Inventor: Coventry-Cox, Lara, Biddaddaba QLD 4275 (AU)
(74) Representative: McCrann, Sarah Ann

(57) **Abstract**

The present invention relates to an improved horseshoe for use in reining. The improved horseshoe allows a horse to selectively and subsequently undertake sliding action in a first mode and manoeuvrability actions in a second mode, the modes determined by the style of riding of the horse, the horseshoe including a substantially u-shaped body portion (10) having a top (12) and bottom (15) surface, the bottom surface (15) of the body portion (10) being ground engaging and including an arrangement of contours to effect sliding action in the first mode and manoeuvrability actions in the second mode, the contours on the bottom surface (15) being shaped and arranged to provide less friction in forward direction to effect the sliding action in the first mode and more friction in another direction different to the direction of slide in a second different mode to aid manoeuvrability actions.

## Description

The present invention relates to an improved horseshoe. The improved horseshoe includes a substantially u-shaped body portion having a top and bottom surface and attachment holes for receiving nails for attaching to a hoof of a horse; the top surface of the body portion being shaped for contacting and affixing to the hoof of the horse; the bottom surface of the body portion being ground engaging.

The invention of the improved horseshoe will be described herein for its application in reining. The improved sliding horseshoe is designed for a reining arena surface which in one form has a hardened very smooth under base with a loose top of approximately 50 millimetres of sand on top.

Reining is a western riding competition for horses where riders guide the horses through a precise pattern of circles, spins and stops. One of the signature moves of reining is the sliding stop. In such a move, the horse accelerates to a gallop and then suddenly comes to a complete halt planting its hind feet and allowing its hind feet to slide several feet while continuing to let its front feet move in a forward direction. Such a powerful move is an appreciated spectacle as it visually produces a cloud of dust as the hind feet of the horse slide.

However, the sliding stop is only one of a number of moves the reining horse will need to perform in a single ride. Such moves include spins and circles. Performing circles requires the reining horse to gallop at varying speeds around the inner perimeter of the arena or in a figure of eight fashion. The reining horse may also be required to stop suddenly after performing such a move. The spins require the reining horse to begin from a standstill and then spin 360 degrees or more in place around its stationary hind legs. The hind pivot foot remains in essentially the same location throughout the spin.

It has been noted by some of the detrimental effects such moves can have on a reining horse as, unlike other types of horse sporting competitions, the manoeuvres required to be performed increase physical stresses to the horse and the prior art does not provide a horseshoe that reduces the possibility of injury when the reining horse is to perform such a combination of manoeuvres.

Currently the prior art provides for sliding shoes for reining which have a large flat and smooth U-shaped surface area in comparison to a usual horseshoe having a wider U-shape with narrower sections providing a smaller surface area. Such a flat surface of the standard reining horseshoe has greater surface area and contact to the ground creating undesirable resistance. As such the prior art has attempted to enhance the effect of the sliding stop manoeuvre by providing such a flat smooth surface which can skim across the ground surface. Therefore, the prior art has attempted to provide a horseshoe for use in reining to specifically perform the sliding stop move effectively, efficiently and most dramatically to an audience. However with such a flat surface significant disadvantages arise.

Of primary significance is that such horseshoes are designed to satisfy only one of the manoeuvres in reining, being the sliding stop. During the manoeuvre, the reining horse will have the standard reining horseshoe on their hind hooves to minimize the traction so that the horse slides when stopped hastily. However, the prior art horseshoe becomes a detriment to the horse when performing other moves such as running in circles at fast speeds as the horse now needs traction to be able to perform turns and fast movements in all straight and circular manners safely. Such a disadvantage can lead to significant injury to the horse and possible injury to the rider if they are thrown off the horse or, more particularly, if the horses were to slip over.

In addition, as the reining horses are judged on their agility, the horseshoes worn must not prevent or impact on the horse's response to the rider's commands. Thus the disadvantages of the prior art illustrates a strong need for a horseshoe that assists reining horses in performing a combination of manoeuvres safely and effectively.

### Statements of Invention

The invention provides an improved horseshoe for a horse to selectively and subsequently undertake sliding action in a first mode and manoeuvrability actions in a second mode, the modes determined by the style of riding of the horse, the horseshoe including:
a. a substantially u-shaped body portion having a top and bottom surface and attachment holes for receiving nails for attaching to a hoof of a horse;
b. the top surface of the body portion being shaped for contacting and affixing to the hoof of the horse;
c. the bottom surface of the body portion being ground engaging and including an arrangement of contours to effect sliding action in the first mode and manoeuvrability actions in the second mode, the contours on the bottom surface being shaped and arranged to provide less friction in forward direction to effect the sliding action in the first mode and more friction in another direction different to the direction of slide in a second different mode to aid manoeuvrability actions.

The improved horseshoe can be shaped with lack of contours forming flat portions to provide for allowing the sliding action in first mode and contour portions to aid the manoeuvrability in the second mode.

The improved horseshoe can be with arrangement of contours to provide for allowing the sliding action in first mode and contour portions to aid the manoeuvrability in the second mode.

The improved horseshoe can be shaped wherein the contours can be arranged with grooves extending substantially in the direction of the sliding action in one direction and walls of the grooves aid the manoeuvrability in the other direction.

The improved horseshoe can include lateral contours arranged relative to the grooves providing the sliding action in one mode such that the sliding mode is maintained in substantially forward direction and walls of the grooves aid the manoeuvrability in the other mode.

In one form there is provided an improved horseshoe for the horse to undertake sliding action and manoeuvrability actions including:
a) a substantially u-shaped body portion having a top and bottom surface;
b) the top surface of the body portion being shaped for being affixed to a hoof of a horse;
c) the bottom surface of the body portion being shaped for allowing a sliding action when the weight of the horse is substantially on the rear of the hoof; and
d) wherein the bottom surface being shaped of a contoured effect for allowing a frictional action when the weight of the horse is substantially on the centre or front of the hoof.

Also the invention provides for an improved horseshoe for the horse to undertake sliding action and manoeuvrability actions, having:
e) a substantially u-shaped body portion having a top and bottom surface;
f) the top surface of the body portion being shaped for being affixed to a hoof of a horse;
g) the bottom surface of the body portion being comprised of an anterior and posterior portion of the surface;
h) wherein the posterior surface comprises of a substantially flat surface at the rear of the horseshoe for allowing a sliding action when the weight of the horse is substantially on the rear of the hoof; and
i) wherein the anterior surface comprises of a contoured effect for allowing a frictional action when the weight of the horse is substantially on the centre or front of the hoof.

The improved horseshoe can be provided for the hind feet of the horse only.

The posterior surface of the horseshoe must have a substantially planar surface of approximately 50%.

The anterior surface of the horseshoe is approximately 50% of the whole bottom surface.

The anterior surface of the horseshoe is contoured by inclusion of a least one set of parallel grooves.

At least one set of parallel grooves can extend at least partially across the anterior surface of the horseshoe. In another embodiment the parallel grooves can extend from the anterior surface to the posterior surface.

The grooves can include sawtooth shaping. The sawtooth shaping can provide a sliding mechanism in a forward direction but a gripping direction in the opposite direction. This allows for the horse to slide forward but to push backwards against the ground to project forwards.

The sawtooth can have a cross-section that is internally leaning such that an improved sliding mechanism is provided.

A flattened sawtooth arrangement can provide a greater sliding surface when weight is provided on the front of his horseshoe and better control and brakeage when weight is provided on the back of the horseshoe.

The anterior surface of the horseshoe can be contoured by inclusion of a plurality of sets of parallel grooves.

At least one or more of the plurality of sets of parallel grooves can extend at an angle to the central axis of the substantially inverted U-shaped horseshoe so as to provide lateral grip and improve sideways manoeuvrability.

The extending angle of the plurality of sets of parallel grooves can be between 30° to 60°.

The plurality of sets of parallel grooves can provide symmetry of two angled groups.

The plurality of sets of parallel grooves provide an asymmetric arrangement to provide for more lateral stability.

The invention further provides for a method of making an improved horseshoe comprising the steps of:
a) providing a generally inverted U-shaped shoe with an opening at the end;
b) providing a smooth posterior surface to allow sliding;
c) contouring the anterior bottom surface of the horseshoe by providing at least one set of parallel grooves;
d) extending the at least one set of parallel grooves in at least partially across the anterior surface of the horseshoe;
e) Providing an anterior surface which forms between 0 to 100% of the whole bottom surface to allow improved grip and increasing slidability; and
f) Providing an attachment means in order to allow the attachment of the horseshoe to the hoof of the horse.

The attachment means can be in the form of apertures in the horseshoe which correspond to the diameter of a pin.

The invention further provides a method of using the improved horseshoe comprising the steps of:
a) Providing an improved horseshoe having a generally inverted u-shape, a posterior bottom smooth surface and an anterior contoured bottom surface top;
b) Attaching an improved horseshoe to the hoof of a horse using the apertures and pins;
c) Accelerating the horse to a gallop wherein the horse, during the gallop, places weight onto the anterior surface of the improved horseshoe allowing traction; and
d) Stopping the horse by allowing the horse to put weight onto the posterior surface of the improved horseshoe allowing the hind feet to slide several feet while continuing to let the front feet of the horse to move in a forward direction.

It can be seen that the invention provides a horseshoe to slide more efficiently in a sliding stop move while preventing slipping in forward motion during the sliding stop whilst ensuring that the horse remains safe in performing other routine manoeuvres in a reining competition.

The improved horse shoes can in one form have a smooth posterior for sliding, however it can have grooves in particular formations throughout the shoe and be suitable for sliding.

The improved horse shoe can also have the ability to keep the horses rear hooves heading/going/moving straight ahead during the slide as the grooves direct the shoe and hoof in a straight line. Also depending on the location of the grooves they create traction which holds the inside of the hoof to the centre, depending on the positioning of the grooves. With the standard shoe horses rear hooves can move outward during the slide - spreading - which then causes injury and also shortens the ability to slide further.

### Brief Description of the Drawings

Preferred embodiments of the invention will now be described, by way of example only, with reference to the accompanying drawings, in which:
Figures 1 to 4 are diagrammatic images of the improved horseshoe in accordance with one embodiment of the invention;
Figures 5 to 8 are diagrammatic images of the improved horseshoe in accordance with a second embodiment of the invention;
Figures 9 to 12 are diagrammatic images of the improved horseshoe in accordance with a third embodiment of the invention;
Figures 13 to 16 are diagrammatic images of the improved horseshoe in accordance with a fourth embodiment of the invention;
Figures 17 to 21 are diagrammatic images of the improved horseshoe in accordance with a fifth embodiment of the invention;
Figures 22 to 25 are diagrammatic images of the improved horseshoe in accordance with a sixth embodiment of the invention;
Figures 26 to 29 are diagrammatic images of the improved horseshoe in accordance with a seventh embodiment of the invention;
Figures 30 to 33 are diagrammatic images of the improved horseshoe in accordance with an eighth embodiment of the invention;
Figures 34 to 37 are diagrammatic images of the improved horseshoe in accordance with a ninth embodiment of the invention; and
Figures 38 to 41 are diagrammatic images of the improved horseshoe in accordance with a tenth embodiment of the invention.

### Description of Preferred Embodiments

With reference to the drawings there is shown a variety of alternatives in which the invention provides an improved horseshoe for a horse to selectively and subsequently undertake sliding action in a first mode and manoeuvrability actions in a second mode. The modes are determined by the style of riding of the horse. The horseshoe includes a substantially u-shaped body portion having a top and bottom surface and attachment holes for receiving nails for attaching to a hoof of a horse. The top surface of the body portion being shaped for contacting and affixing to the hoof of the horse. The bottom surface of the body portion being ground engaging and including an arrangement of contours to effect sliding action in the first mode and manoeuvrability actions in the second mode, the contours on the bottom surface being shaped and arranged to provide less friction in forward direction to effect the sliding action in the first mode and more friction in another direction different to the direction of slide in a second different mode to aid manoeuvrability actions.

The first mode is when undertaking one of the signature moves of reining, which is the sliding stop. In such a move, the horse accelerates to a gallop and then suddenly comes to a complete halt planting its hind feet and allowing its hind feet to slide several feet while continuing to let its front feet move in a forward direction. The second mode can be the other aspects of reining in which the riders guide the horse through a precise pattern of circles, spins and stops.

The improved horseshoe has a substantially u-shaped body portion 10 however, it is envisaged that the body portion 10 can be shaped as desired and can be narrower or wider or alternatively in a more circular or open ended quadrilateral shape.

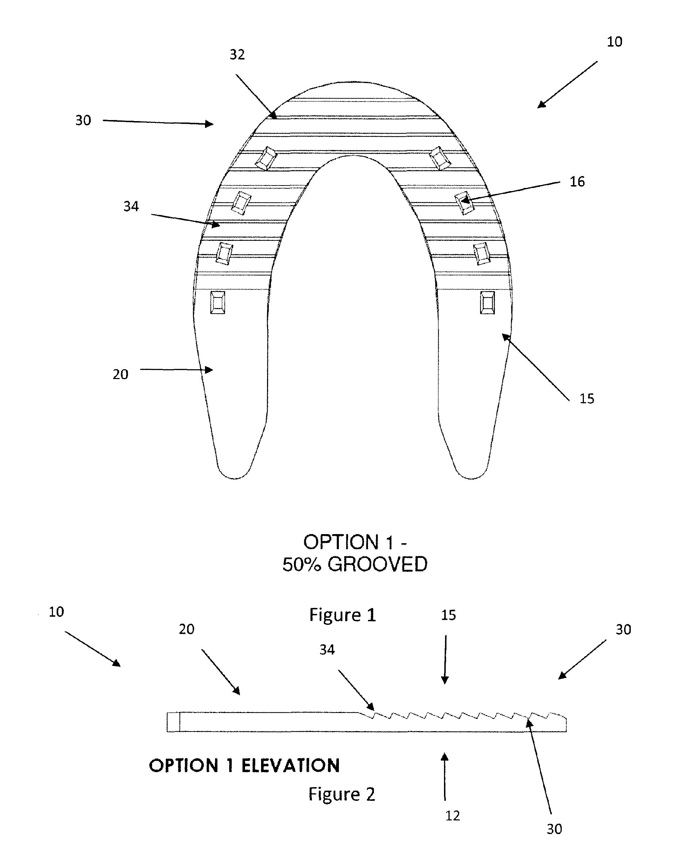

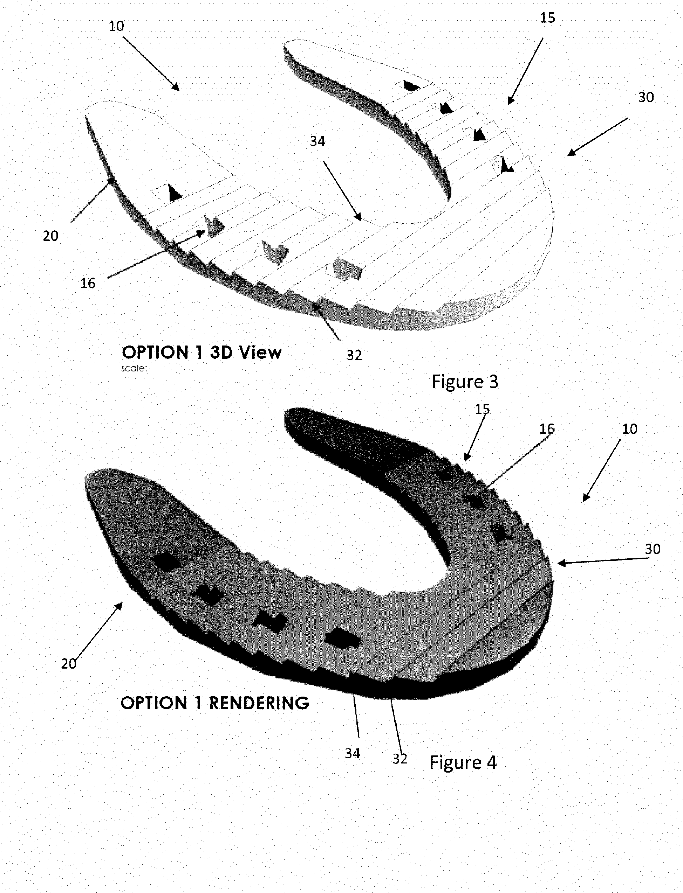

Referring in particular to Figures 1 to 4, although similarly applying to other embodiments, there is the body portion 10 which provides for a bottom surface 15 and top surface 12. The body portion provides for apertures 16 which extend from the bottom surface 15 to the top surface 12 to allow for the insertion of nails, pins etc to assist in attaching the top surface 12 of the body portion to the horses hoof. Therefore, the top surface 12 of the body portion 10 is shaped accordingly for being affixed to the hoof of a horse.

It is preferred that the top surface 12 of the body portion 10 is substantially flat for being fixed to the hooves of a horse. The top surface 12 can have grooves or a rippled surface or, to assist in fitting the improved horseshoe to the horse hoof, it can be angled or slanted in a non linear fashion or alternatively, to assist in the attachment to the shoe, provide for a temporary adhesive. In addition, the top surface 12 can be provided with a padded layer or a rubber layer to provide compression if desired.

The bottom surface 15 of the body portion 10 is the area of the body portion which makes contact with the surface of the ground, asphalt etc. The bottom surface 15 comprises of a posterior surface 20 and an anterior surface 30. The posterior surface 20 forms the area at the rear of the horseshoe for allowing a sliding action when the weight of the horse is substantially on the rear of the hoof.

The posterior surface 20 comprises of a substantially flat surface which can be formed of the same material as the anterior surface 30 or of a different or opposing material to provide for a different effect. For example, whilst the anterior surface may be of metal, the posterior surface 20 can provide for a rubber surface to allow for compressive effect.

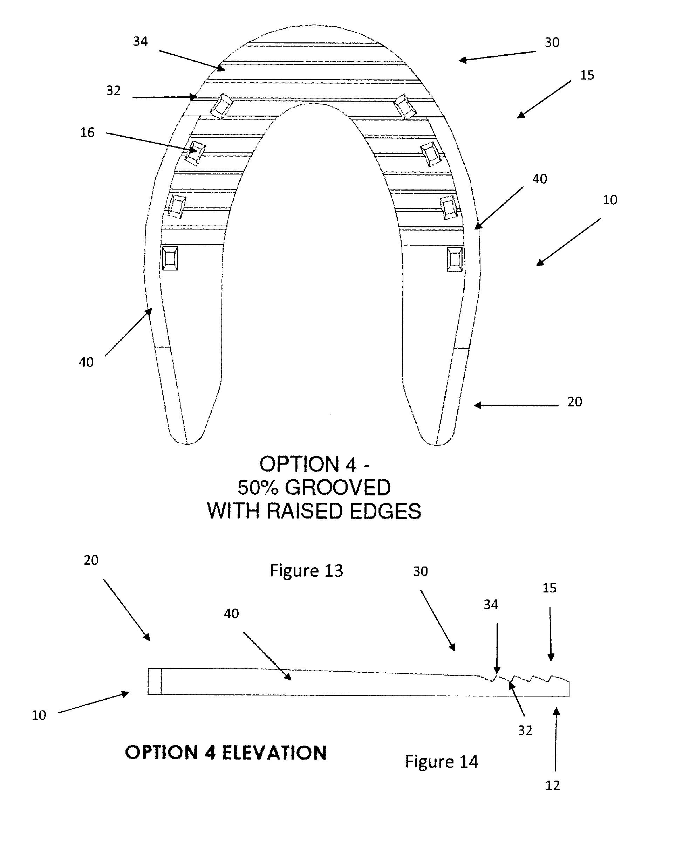

In a further embodiment of the invention, the posterior surface 20 can alter in angles or lengths or curvatures. In doing so the posterior surface 20 provides the outer edges of the U-shaped body portion which can be thinner or thicker than the anterior surface. In a further embodiment, the posterior surface 20 can have raised edges that gradually increase in height such as from the bottom surface from the anterior surface to the posterior surface. Such an embodiment is illustrated in Figures 13 to 16.

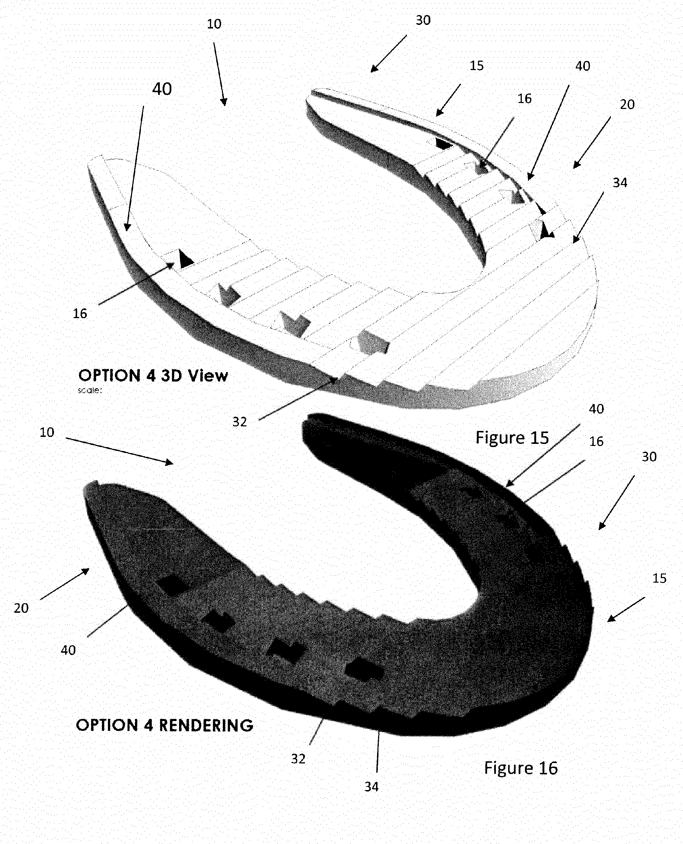

Further the anterior surface and/or the posterior surface can provide for an outer edge 40 in the form of a border. Such an embodiment is presented in Figures 15 to 18 where the horseshoe is provided with a winged effect. The outer edge 40 can be raised from the front of anterior end to the posterior end. Alternatively the outer edge 40 can be raised from the inner side of the body portion to the outer side. Such modifications will reduce inward slip when the horse is performing fast circles in a reining manoeuvre.

In addition, the outer edge 40 can provide for a different material, different pattern or angles of grooves or contrasting effect to the remainder of the body portion to create the desired effect.

The anterior surface 30 comprises of a contoured effect for allowing a frictional action when the weight of the horse is substantially on the centre or front of the hoof. The contoured effect can also be a rippled effect formed by deep grooves 32 between undulated segments 34. The grooves 32 can be formed of rigid or non rigid material. However, it is preferred that the invention provides for rigid material such as of metallic substance in order to allow non-compression. The grooves 32 form in between the undulated segments 34. The top of the undulated segments rise to a common plane forming a sliding plane. In some forms the top can have flattened portions 34 which appear as spacing between grooves 32 to increase surface area on common plane forming sliding plane.

In the embodiment presented in Figures 1 to 4 the anterior surface 30 can encompass at least or approximately 50% of the bottom surface 15.

The undulated segments 34 can be of differing angles as desired or of greater width to allow for less grooves 32 or in contrast the undulated segments 34 can be of smaller width to allow for a larger number of grooves 32 on the bottom surface.

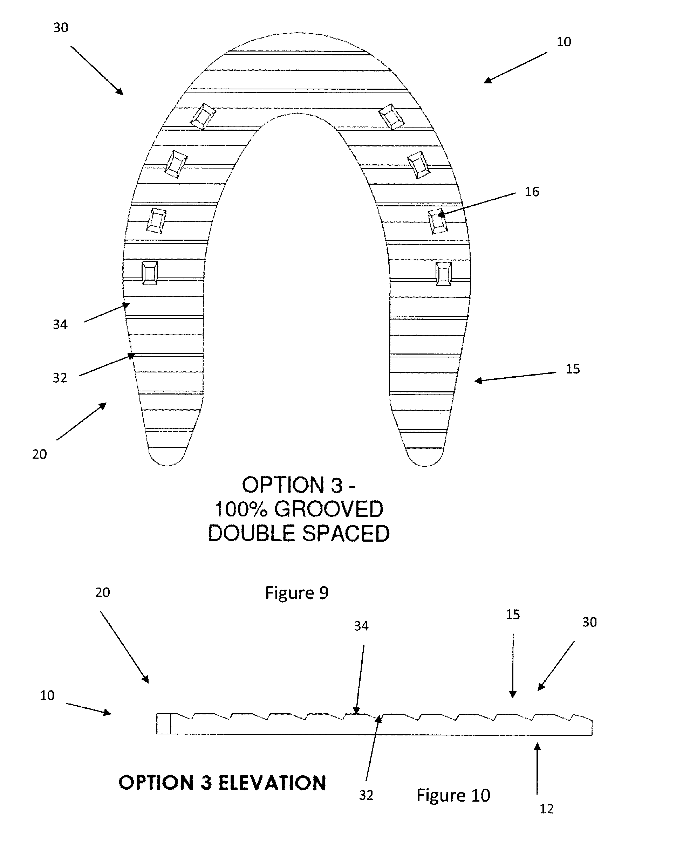

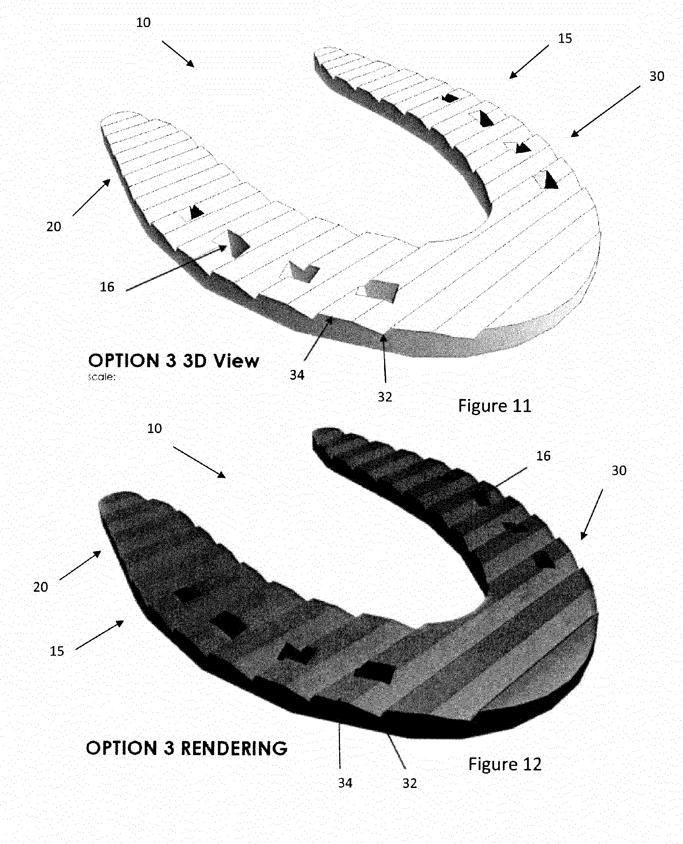

For a comparative example, the first embodiment presented in figures 1 to 4 can be contrasted to the third embodiment presented in Figures 9 to 12 where the length of the grooves 32 are increased and the undulated segments 34 are double the size of the undulated segments 34 in the first embodiment. Therefore, the improved horseshoe can be manipulated as desired to provide for different numbers, sizes, depths and angles of the grooves and the undulated segments 34. The first and second embodiments can be further modified to provide a single horseshoe with a series of varying or alternating grooves and undulated segments 34.

The grooves 32 can be of wave like, sawtooth shaped or, as illustrated in the accompanying figures can be of a tapered effect and aligned in parallel to one another. The parallel grooves 32 can extend at least partially across the anterior surface 30 of the horseshoe and can further extend towards and onto the posterior surface 20 of the horseshoe.

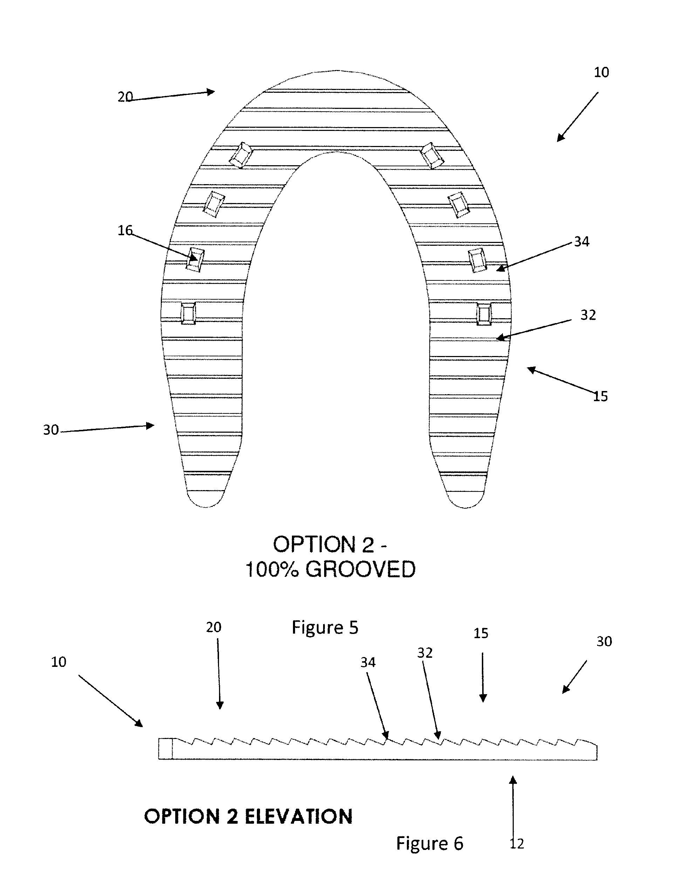

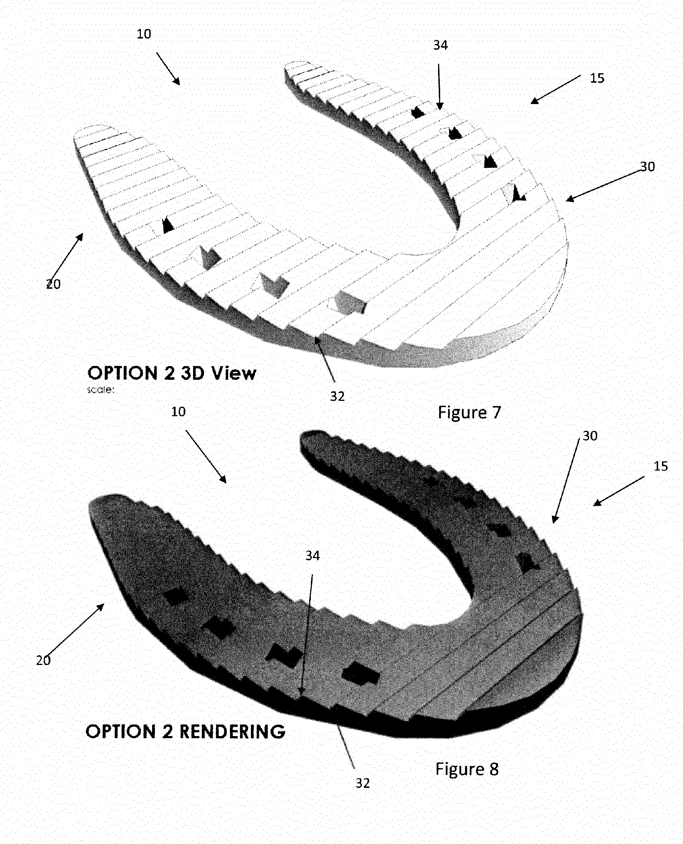

Such a variation is seen in the second embodiment of the invention presented in Figures 5 to 8. In such an embodiment, the parallel grooves extend along the whole bottom surface of the body portion, the grooves 32 can be formed by the placement of strips of material such as metal slightly apart to form the groove 32. The grooves can be modified to provide differing angles or topography of the grooves, a greater surface of grooves or a winged edge. Alternatively, the grooves 32 can include a sawtooth shaping with a cross-section that is internally leaning. Such a feature can provide a sliding mechanism in a forward direction but a gripping direction in the opposite direction. This allows for the horse to slide forward but to push backwards against the ground to project forwards.

The extending angles of the plurality of sets of parallel grooves can be between 30° to 60°. In addition, the extending angles can be symmetrical or asymmetrical along each arm forming the u-shape body portion of the horseshoe. In this manner, different topographic can be used to assist the horse in performing additional manoeuvres.

Further to such an embodiment of the invention, the left and right sides of the horseshoe can be identical or different along the access of symmetry. In such a manner, a further embodiment may be that only a right side for example on the anterior surface has contouring effect whilst the left side of the anterior surface 30 can be flat.

The undulated segments 34 can be of varying lengths such as when presented in parallel to one another, one line of the undulated segment 34 may be higher than another further assisting in obtaining traction during the performance of different manoeuvres.

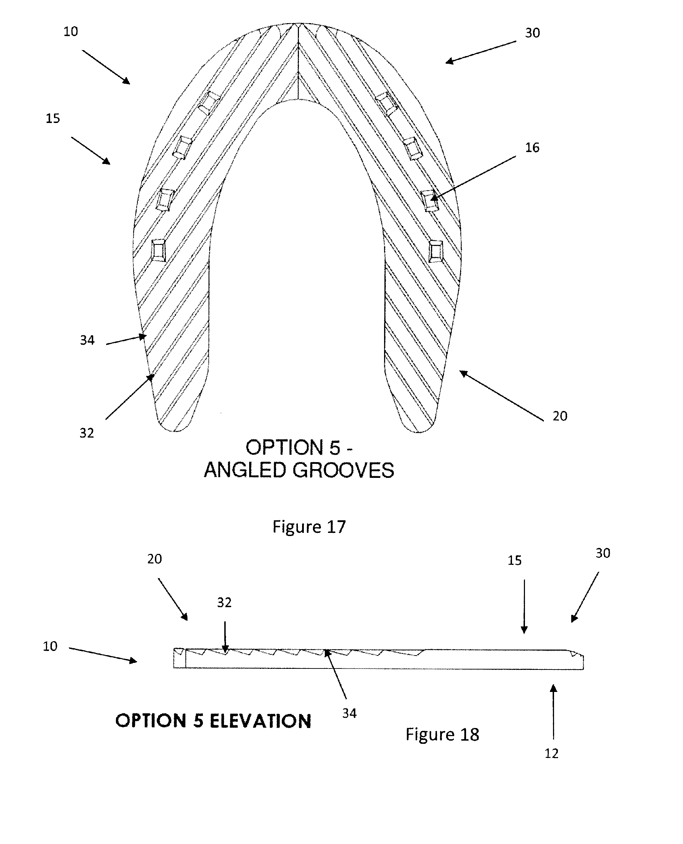

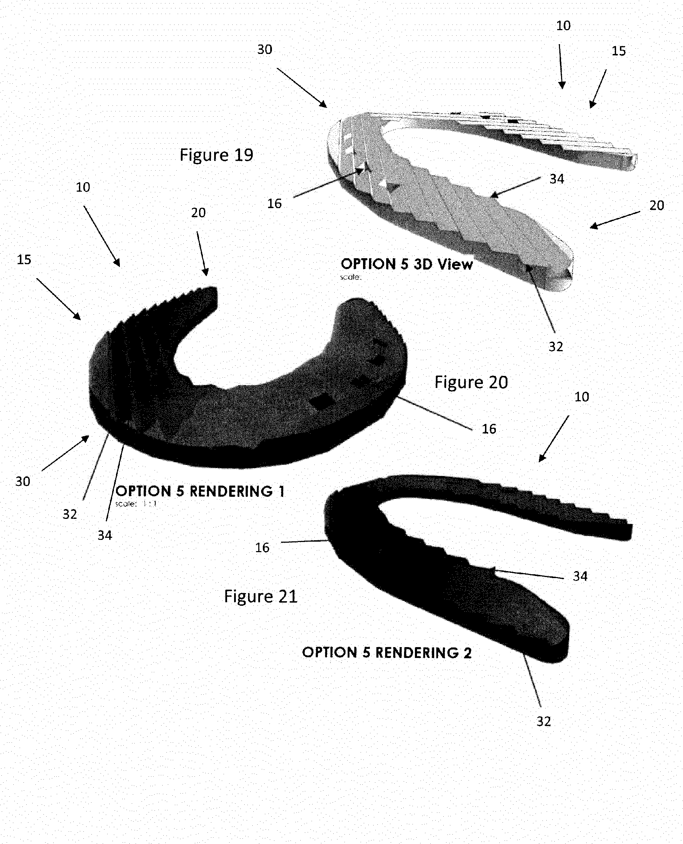

The grooves 32 can therefore be parallel to one another as illustrated in the first embodiment of the invention in Figures 1 to 4. The parallel can be formed from the anterior surface to the posterior surface 20. Alternatively, the parallel can be formed from the left side of the u-shape portion to the right side. In a further embodiment, the undulated segments 34 can be in the form of angled grooves 32 as seen in a fifth embodiment of the invention presented in Figures 17 to 20. In such an embodiment, the invention is provided with a line of symmetry down the centre of the body portion in a lengthwise direction.

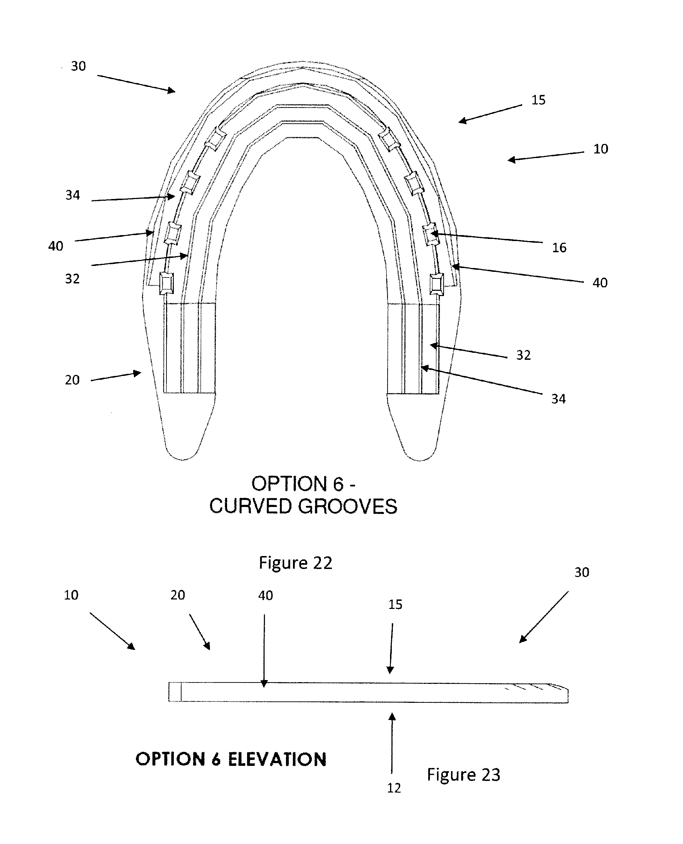

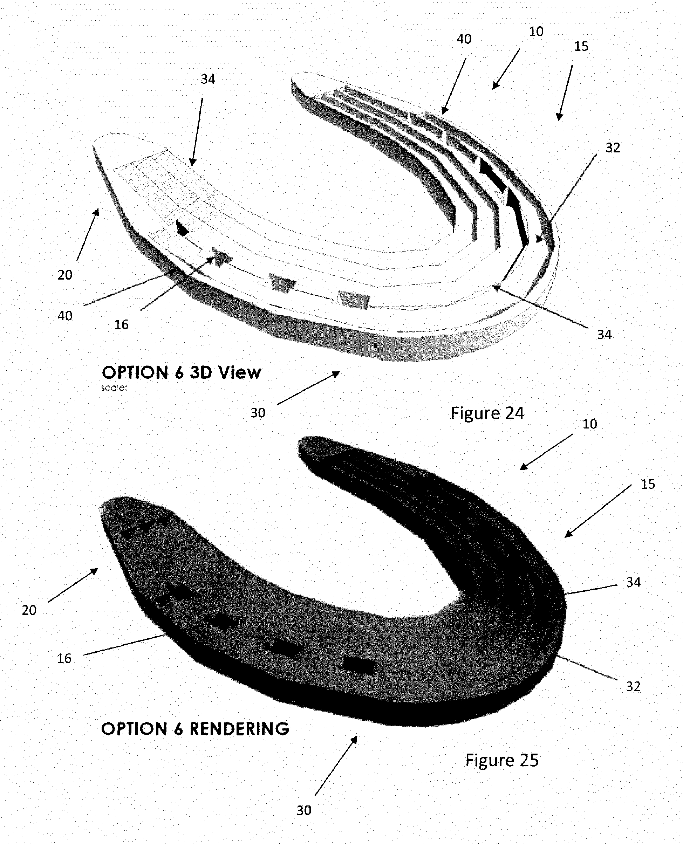

In a further embodiment, the contouring surface can be provided with curved grooves 32 as illustrated in the sixth embodiment of the invention presented in Figures 22 to 25. In such a fashion, the grooves 32 curve around and follow the natural curves of the u-shape body portion of the improved horseshoe.

The invention further provides for a method of making an improved horseshoe comprising the steps of firstly providing a generally inverted u-shaped shoe with an opening at the end. The improved horseshoe can then be provided with a posterior bottom smooth surface 20 to allow sliding and an anterior contoured top surface 30 to allow improved grip. The at least one set of parallel grooves 32 can be extended in at least partially across the anterior surface of the horseshoe to provide an anterior surface which forms approximately 50% of the whole bottom surface to allow improved grip. The horseshoe will also be provided with an attachments means, such as apertures 16 corresponding to the diameter of the pins to be used, to attach the horseshoe to the hoof of the horse.

The invention further provides a method of using the improved horseshoe comprising of attaching the improved horseshoe, in accordance with the preferred embodiment described above such an improved horseshoe having a generally inverted u-shape with an opening, a posterior bottom smooth surface 20 and an anterior contoured surface top 30. The rider is then able to instruct the horse to perform a sliding stop whereby rider instructs the horse to accelerate into a gallop. Whist the horse is travelling at high speeds traction is required and compression to prevent the horse from sliding around corners and thus preventing injuries to the horse and to the rider. Therefore, during such a gallop the horse naturally provides weight to the front of their hoof corresponding to the anterior surface 30 of the modified horseshoe. The horse then performs the sliding stop by allowing the horse to put weight onto the posterior surface 20 of the horseshoe, corresponding to the weight at the back of the hoof to allow the hind feet to slide several feet while continuing to let the front feet of the horse to move in a forward direction. During the sliding the characteristics of the posterior surface 20 allows the hind legs to slide along the ground with less resistance to give forward sliding ease whilst providing sufficient support in which to prevent a backward motion on the shoe.

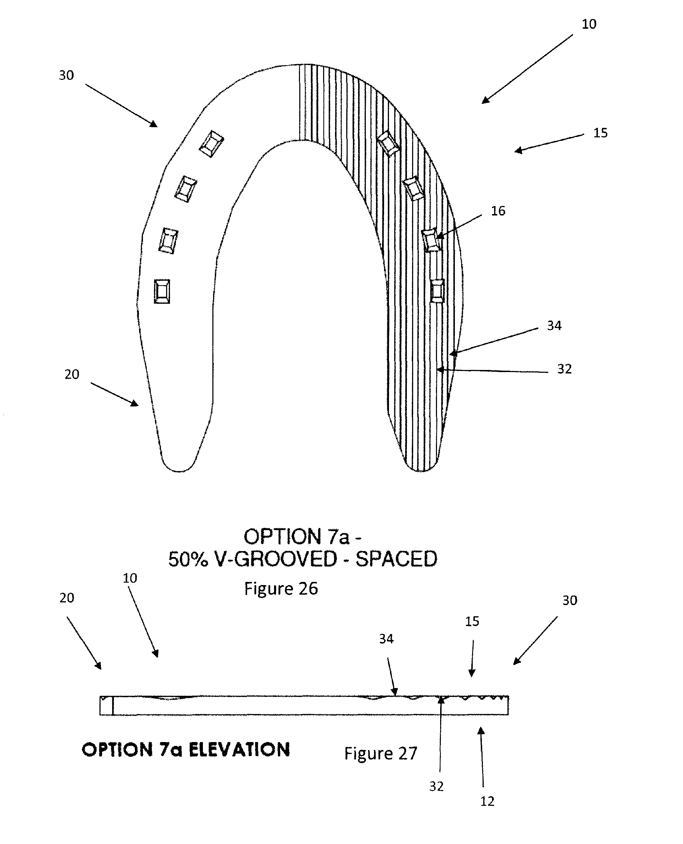

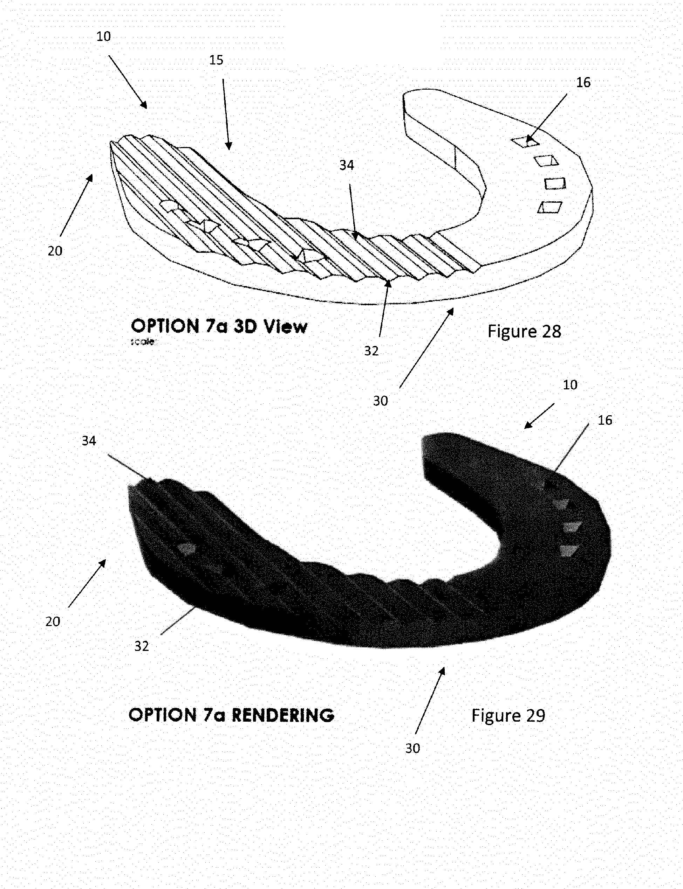

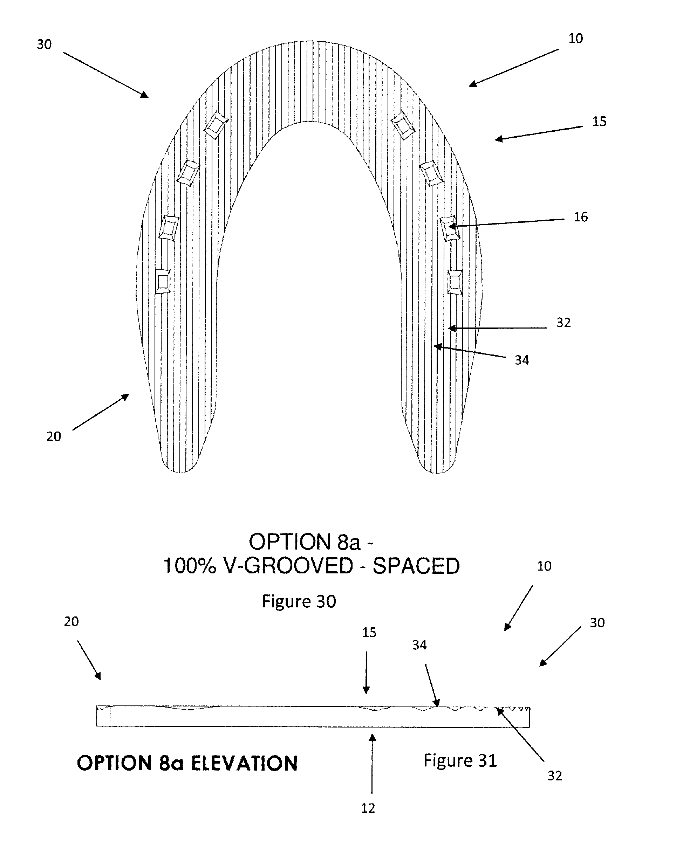

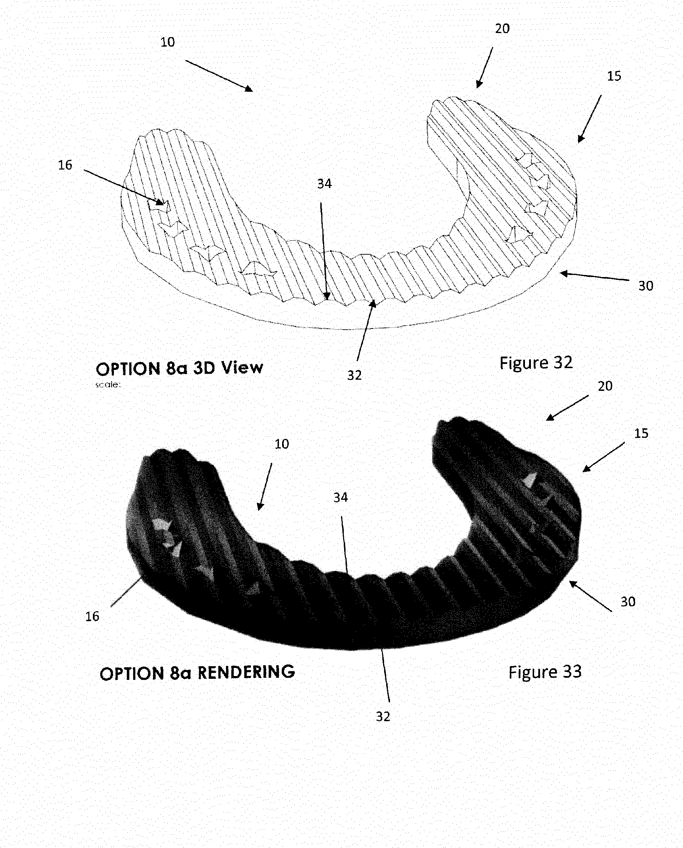

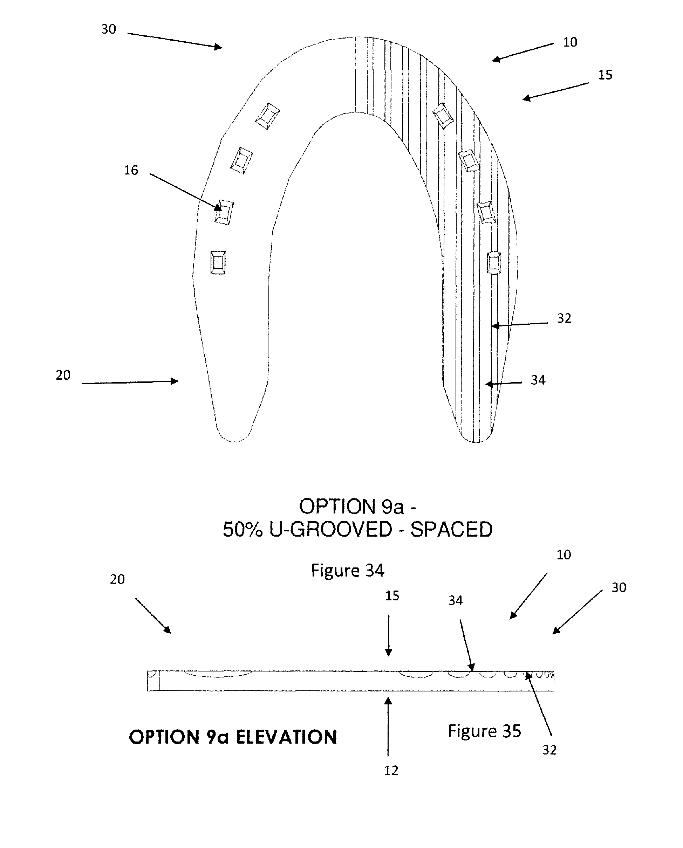

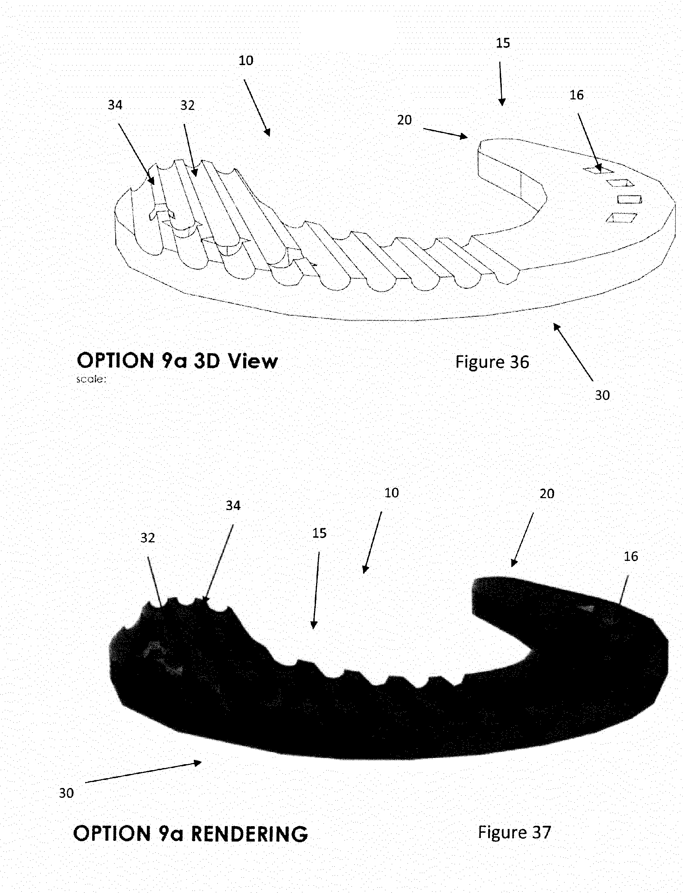

It can be seen that the improved horseshoe can be shaped with lack of contours forming flat portions to provide for allowing the sliding action in first mode and contour portions to aid the manoeuvrability in the second mode. This is shown in versions as shown in Figures 1 to 4 that has lateral grooves 32 with rear flat portion, figures 26 to 29 that has V-shaped grooves 32 extending to the front of the horseshoe over half of the horseshoe while the other half is flat, and in Figures 34 to 37 has U-shaped grooves 32 extending to the front of the horseshoe over half of the horseshoe while the other half is flat. Still further Figures 30 to 33 and 34 to 37 has flat common plane flat portions forming a sliding plane spacing between longitudinal grooves 32 as has Figures 9 to 12 has flat common plane flat portions forming a sliding plane spacing between laterally extending grooves 32.

It can further be seen that the improved horseshoe can be shaped with arrangement of contours to provide for allowing the sliding action in first mode and contour portions to aid the manoeuvrability in the second mode. This is shown in versions as shown in Figures 5 to 8 which have shaped contours extending across all of the horseshoe but with less friction to allow sliding forward, while in the second mode the horse has increased friction when pushing backwards in the second mode. Also in Figures 9 to 12 there is similarly laterally extending grooves 32 and spacing of said grooves 32 to provide flat surfaces in a common plane forming a sliding plane. Still further in Figures 13 to 16 which have shaped contours extending across a substantial width of the horseshoe but with less friction to allow sliding forward, while in the second mode the horse has increased friction when pushing backwards in the second mode.

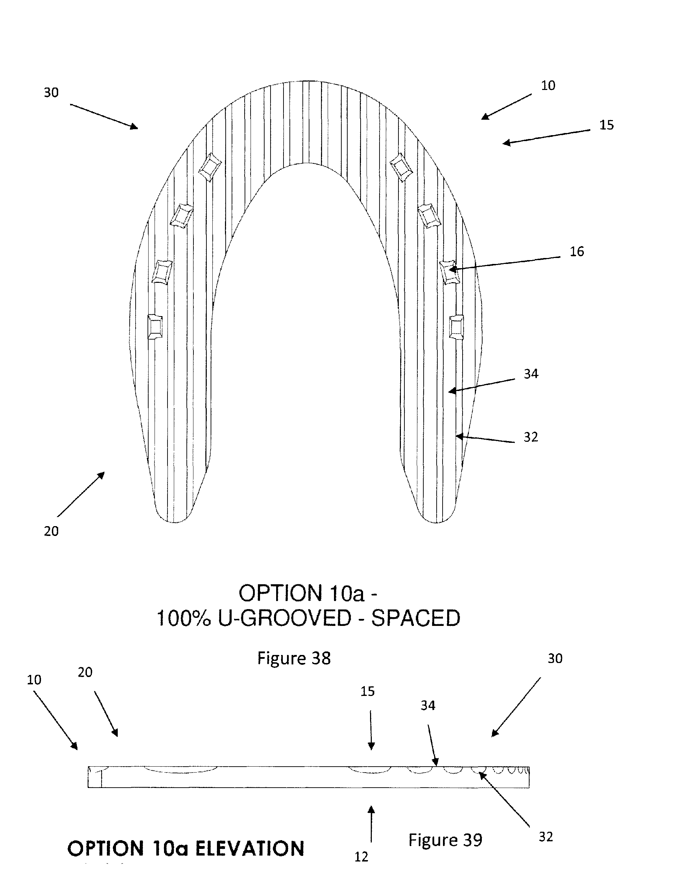

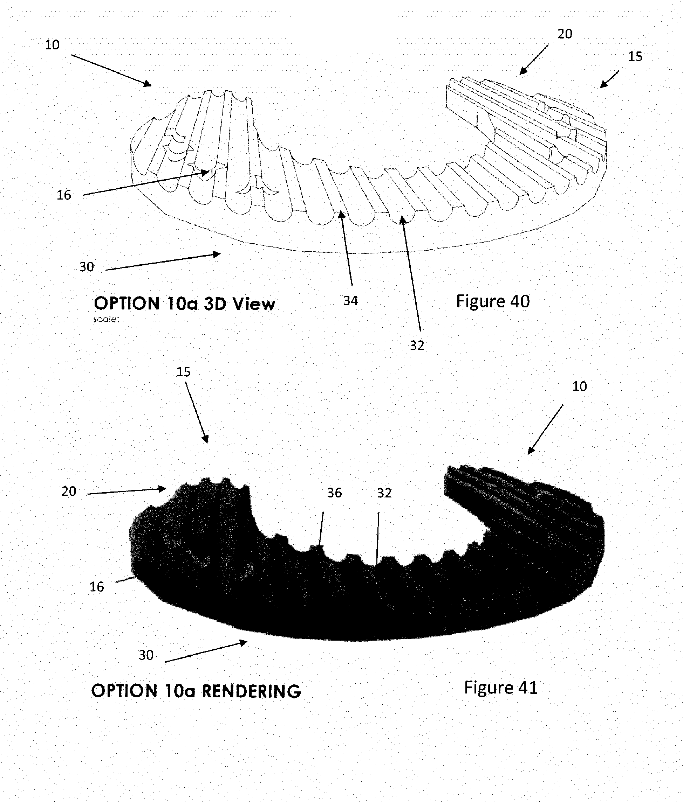

It can still further be seen that the improved horseshoe can have the contours arranged with grooves 32 extending substantially in the direction of the sliding action in one direction and walls of the grooves 32 aid the manoeuvrability in the other direction. This is shown in versions as shown in Figures 17 to 21 which have grooves 32 extending in a left grouping and a right grouping extending to the front of the horseshoe but angled inwardly partly towards each other group. This provides the front slide motion in the first mode while allowing manoeuvrability in the second mode. Also in Figures 22 to 25 there is substantially continuous curve following the U shape of the horseshoe but in fragmented linear sections that results in grooves 32 substantially extending to the front but stopped by the front edge. Overall this substantial forward extending groove provides a forward sliding action in the first mode. Also Figures 26 to 29, 30 to 33 have V shaped grooves 32 extending to the front while Figures 34 to 37, 38 to 41 have U shaped grooves 32 extending to the front. The side walls of the grooves 32 can provide the manoeuvrability in the second mode.

It can also be seen that improved horseshoe can include lateral contours arranged relative to the grooves 32 providing the sliding action in one mode such that the sliding mode is maintained in substantially forward direction and walls of the grooves 32 aid the manoeuvrability in the other mode. This is shown in various forms in Figures 13 to 16, 17 to 21, 22 to 25, and 26 to 29. In particular Figures 13 to 16 which have shaped contours extending across a substantial width of the horseshoe but with less friction to allow sliding forward, while in the second mode the horse has increased friction when pushing backwards in the second mode. However the outermost lateral edges include a lateral contour with height at the common plane of the sliding plane but at the top most height of the lateral extending grooves 32 such it provides lateral stability for the horse in the sliding first mode. This stability is provided in Figures 17 to 21 and Figures 26 to 29 by grooves 32 being to the outer side of the hoof and the side walls of the grooves 32. In Figures 22 to 25 there is an outermost peripheral wall following the U-shape of the horseshoe and providing the outermost lateral with height at the common plane of the sliding plane but at the top most height of the U-shape extending grooves 32 such it provides lateral stability for the horse in the sliding first mode.

It can further be seen that some examples include multiple forward sliding effects, or multiple greater friction means in second mode or multiple lateral contours preventing sideways slide. Some of the features are performed by the same elements.

Those of skill in the art will appreciate that such modifications or changes to the particular embodiments exemplified can be made without departed from the scope of the invention. All such modifications and changes are intended to be included within the scope of the appended claims.

Such changes can include, but are by no means limited to the characteristics of the surface of the anterior surface 30 and the posterior surface 20. For example, it is envisaged that the characteristics of the posterior surface and the anterior surface can be swapped. Alternatively, the characteristics of the posterior surface can continue onto the anterior surface.

## Claims

1. An improved horseshoe for a horse to selectively and subsequently undertake sliding action in a first mode and manoeuvrability actions in a second mode, the modes determined by the style of riding of the horse, the horseshoe including:
a. a substantially u-shaped body portion having a top and bottom surface and attachment holes for receiving nails for attaching to a hoof of a horse;
b. the top surface of the body portion being shaped for contacting and affixing to the hoof of the horse;
c. the bottom surface of the body portion being ground engaging and including an arrangement of contours to effect sliding action in the first mode and manoeuvrability actions in the second mode, the contours on the bottom surface being shaped and arranged to provide less friction in forward direction to effect the sliding action in the first mode and more friction in another direction different to the direction of slide in a second different mode to aid manoeuvrability actions.

2. An improved horseshoe according to claim 1, being shaped with lack of contours forming flat portions to provide for allowing the sliding action in first mode and contour portions to aid the manoeuvrability in the second mode.

3. An improved horseshoe according to claim 1 or 2, being shaped with arrangement of contours to provide for allowing the sliding action in first mode and contour portions to aid the manoeuvrability in the second mode.

4. An improved horseshoe according to any one of the preceding claims wherein the contours can be arranged with grooves extending substantially in the direction of the sliding action in one direction and walls of the grooves aid the manoeuvrability in the other direction.

5. An improved horseshoe according to any one of the preceding claims including lateral contours arranged relative to the grooves providing the sliding action in one mode such that the sliding mode is maintained in substantially forward direction and walls of the grooves aid the manoeuvrability in the other mode.

6. An improved horseshoe according to any one of the preceding claims being shaped with grooves extending across the horseshoe at the front substantially across the direction of slide, the grooves having a sawtooth shape to provide for allowing a sliding action in a forward direction in one mode and walls of the grooves aid the manoeuvrability of horse in the another mode.

7. An improved horseshoe according to claim 6 wherein the sawtooth has a cross-section that is internally leaning such that an improved sliding mechanism is provided.

8. An improved horseshoe according to claim 6 wherein the sawtooth shaping provides a flattened sawtooth arrangement which provides a greater sliding surface when weight is provided on the front of his horseshoe and better control and brakeage when weight is provided on the back of the horseshoe.

9. An improved horseshoe according to any one of the preceding claims wherein the modes occur when the weight of the horse moves between substantially on the front of the hoof to substantially on the rear of the hoof; and wherein the bottom surface being shaped of a contoured effect for allowing a sliding action when the weight of the horse is substantially on the rear of the hoof to a mode when the weight of the horse is substantially on the centre or front of the hoof wherein frictional action aid the manoeuvrability of horse in the another mode.

10. An improved horseshoe according to any one of the preceding claims wherein the improved horseshoe is provided for the hind feet of the horse only.

11. An improved horseshoe according to any one of the preceding claims wherein the posterior surface of the horseshoe must have a substantially planar surface of approximately 50%.

12. An improved horseshoe according to any one of the preceding claims wherein the bottom surface of the horseshoe is contoured by inclusion of a least one set of parallel grooves.

13. An improved horseshoe according to claim 12 wherein at least one set of parallel grooves can extend at least partially across the anterior surface of the horseshoe.

14. An improved horseshoe according to claim 12 wherein at least one or more of the plurality of sets of parallel grooves extends at an angle to the central axis of the substantially inverted U-shaped horseshoe so as to provide lateral grip and improve sideways manoeuvrability.

15. An improved horseshoe according to claim 14 wherein the extending angle of the plurality of sets of parallel grooves is between 30° to 60°.

16. An improved horseshoe according to claim 12 wherein the plurality of sets of parallel grooves provide symmetry of two angled groups.

17. A method of making an improved horseshoe comprising the steps of:
a. providing a generally inverted U-shaped shoe with an opening at the end;
b. providing a smooth posterior surface to allow sliding;
c. contouring the anterior bottom surface of the horseshoe by providing at least one set of parallel grooves;
d. extending the at least one set of parallel grooves in at least partially across the anterior surface of the horseshoe;
e. Providing an anterior surface which forms between 0 to 100% of the whole bottom surface to allow improved grip and increasing slidability; and
f. Providing an attachment means in order to allow the attachment of the horseshoe to the hoof of the horse.
